(19) **Europäisches Patentamt / European Patent Office / Office européen des brevets**

(11) **EP 2 722 377 A1**

(12) **EUROPEAN PATENT APPLICATION**
published in accordance with Art. 153(4) EPC

(43) Date of publication:
**23.04.2014 Bulletin 2014/17**

(21) Application number: **12801079.0**

(22) Date of filing: **07.06.2012**

(51) Int Cl.:
***C09J 133/10*** (2006.01)    ***C09J 7/00*** (2006.01)
***C09J 7/02*** (2006.01)    ***C09J 133/14*** (2006.01)

(86) International application number:
**PCT/JP2012/064691**

(87) International publication number:
**WO 2012/173039 (20.12.2012 Gazette 2012/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2011 JP 2011132384**

(71) Applicant: **Nitto Denko Corporation
Ibaraki-shi, Osaka 567-8680 (JP)**

(72) Inventors:
• **HIGASHI, Masatsugu
Ibaraki-shi
Osaka 567-8680 (JP)**
• **TANAKA, Akiko
Ibaraki-shi
Osaka 567-8680 (JP)**
• **MATSUURA, Aimi
Ibaraki-shi
Osaka 567-8680 (JP)**
• **INOUE, Tetsuo
Ibaraki-shi
Osaka 567-8680 (JP)**

(74) Representative: **Grünecker, Kinkeldey,
Stockmair & Schwanhäusser
Leopoldstrasse 4
80802 München (DE)**

(54) **ADHESIVE COMPOSITION, ADHESIVE LAYER, AND ADHESIVE SHEET**

(57)    Provided is a pressure-sensitive adhesive composition capable of realizing a pressure-sensitive adhesive layer having satisfactory adhesion performance and a low dielectric constant. This pressure-sensitive adhesive composition is characterized by containing a methacrylic polymer with a glass transition temperature (Tg) of 0°C or less obtained by polymerization of monomer components including 40-99.5 weight% of alkyl methacrylate having a C10-C18 alkyl group in a side chain. A pressure-sensitive adhesive layer and an adhesive sheet are also prepared from the said pressure-sensitive adhesive composition.

FIG.1

EP 2 722 377 A1

**Description**

TECHNICAL FIELD

The present invention relates to a pressure-sensitive adhesive composition capable of realizing a low dielectric constant, a pressure-sensitive adhesive layer obtained from the pressure-sensitive adhesive composition, and a pressure-sensitive adhesive sheet having a support and such a pressure-sensitive adhesive layer over at least one surface of the support.

A pressure-sensitive adhesive layer or a pressure-sensitive adhesive sheet of the present invention is suitable for optical articles. The pressure-sensitive adhesive layer or pressure-sensitive adhesive sheet of the invention is usable suitably for, e.g., the production of an image display device such as a liquid crystal display device, an organic EL (electroluminescence) display device, a PDP (plasma display panel) or an electronic paper, or the production of an input instrument for a touch panel or the like in an optical, ultrasonic, electrostatic capacity or resistance film manner, or some other manner. They are usable suitably, in particular, for a touch panel in an electrostatic capacity manner.

The pressure-sensitive adhesive sheet of the invention is also useful as a pressure-sensitive adhesive-type optical member in which an optical member is used as a support. In the case of using, for example, a transparent conductive film as the optical member, the pressure-sensitive adhesive-type optical member is used as a transparent conductive film with the pressure-sensitive adhesive-layer. The transparent conductive film with the pressure-sensitive adhesive-layer is appropriately subjected to processing treatment, and then used as a transparent electrode in, for example, an image display device or touch panel as described above. About the transparent conductive film with the pressure-sensitive adhesive-layer, its transparent conductive thin film is patterned; and in this state, the transparent conductive film with the pressure-sensitive adhesive-layer is used in particular preferably as an electrode substrate of a touch panel input instrument in an electrostatic capacity manner. Additionally, the transparent conductive film with the pressure-sensitive adhesive-layer is used for preventing the electrification of a transparent article or for blocking electromagnetic waves thereinto, or used in a liquid crystal light-control glass piece or a transparent heater.

In the case of using an optical film as the optical member, the pressure-sensitive adhesive-type optical member is used as an optical film with a pressure-sensitive adhesive layer. The optical film with a pressure-sensitive adhesive layer is used in an image display device such as a liquid crystal display device, or an organic EL display device. As the optical film, the following is usable: a polarizing plate, a retardation plate, an optical compensation film or a brightness enhancement film, or a laminate composed of two or more of these members.

BACKGROUND ART

In recent years, input instruments, such as portable telephones and portable music players, have been spreading, these instruments being each used in the form of a combination of an image display device with a touch panel. In particular, touch panels in an electrostatic capacity manner have been rapidly spreading because of the functionality thereof.

As a transparent conductive film used for touch panels at present, many species are known, examples of which include laminates in which a transparent conductive thin film (ITO film) is laminated on transparent plastic film substrates or a glass piece. The transparent conductive film is laminated to another member to interpose a pressure-sensitive adhesive layer therebetween. As the pressure-sensitive adhesive layer, various species are suggested (see Patent Documents 1 to 4).

When the transparent conductive film is used in an electrode substrate of a touch panel in an electrostatic capacity manner, a patterned transparent conductive thin film as described is used. Such a transparent conductive film, which has a patterned transparent conductive thin film, is used in the state of being laminated onto other transparent conductive films or the like to interpose a pressure-sensitive adhesive layer between any two of these films. These transparent conductive films are used suitably for an input instrument in a multi-touch manner, which is operable simultaneously with two or more fingers. Specifically, a touch panel in an electrostatic capacity manner has a mechanism in which: at the time of touching the touch panel with fingers, or some other, an output signal at the touched position is changed; and when an amount in the change of the signal exceeds a threshold value, the touching is sensed.

PRIOR ART DOCUMENTS

PATENT DOCUMENTS

Patent Document 1: JP-A-2003-238915

Patent Document 2: JP-A-2003-342542
Patent Document 3: JP-A-2004-231723
Patent Document 4: JP-A-2002-363530

## SUMMARY OF THE INVENTION

### PROBLEMS TO BE SOLVED BY THE INVENTION

As described above, the dielectric constant of members constituting a touch panel, and its film is related to the responsibility of the touch panel so as to be important numerical values. In the meantime, in recent years, with the spread of touch panels, the touch panels are required to be made higher in performances. A transparent conductive film or pressure-sensitive adhesive layer that is a constituent member of each of the panels is also required to be made higher in performances. One of such requirements is that the film or layer is made thinner. However, when the pressure-sensitive adhesive layer is made simply thinner, the designed value of the electrostatic capacity thereof is changed. In order to make the pressure-sensitive adhesive layer thinner without changing the numerical value of the electrostatic capacity, the pressure-sensitive adhesive layer is desired to be made low in dielectric constant.

Thus, an objective of the present invention is to provide a pressure-sensitive adhesive composition which satisfies bonding performance and can realize a pressure-sensitive adhesive layer low in dielectric constant.

Another objective of the invention is to provide a pressure-sensitive adhesive layer formed with the use of the pressure-sensitive adhesive composition, and a pressure-sensitive adhesive sheet having the pressure-sensitive adhesive layer.

### MEANS FOR SOLVING THE PROBLEMS

In order to solve the above-mentioned problems, the inventors have repeatedly made eager investigations to find out a pressure-sensitive adhesive composition described below. Thus, the invention has been accomplished.

Accordingly, the invention relates to a pressure-sensitive adhesive composition, which contains a methacryl-based polymer obtained by polymerizing monomer components containing 40 to 99.5% by weight of an alkyl methacrylate having at its side chain a C10-C18 alkyl group, and having a glass transition temperature (Tg) of 0°C or lower.

The above-mentioned methacryl-based polymer preferably has a weight-average molecular weight of 400, 000 to 2, 500, 000.

The above-mentioned monomer components may further contain 0.5% or more by weight of at least any one functional-group-containing monomer selected from carboxyl-group-containing monomers, hydroxyl-group-containing monomers, and cyclic-ether-group-containing monomers.

The above-mentioned monomer components may further contain a (meth)acryl-based monomer having at its side chain a C1-C10 alkyl group.

The above-mentioned monomer components may further contain a (meth)acryl-based monomer having at its side chain a C3-C10 branched alkyl chain.

The present invention also relates to a pressure-sensitive adhesive layer, which is obtained from the pressure-sensitive adhesive composition of any of the above.

The above-mentioned pressure-sensitive adhesive layer may have a dielectric constant of 3.5 or less at a frequency of 100 kHz.

The above-mentioned pressure-sensitive adhesive layer preferably has a gel fraction of 20 to 98% by weight.

The above-mentioned pressure-sensitive adhesive layer preferably has a haze of 2% or less when the pressure-sensitive adhesive layer has a thickness of 25 $\mu$m.

The present invention also relates to a pressure-sensitive adhesive sheet, comprising a support, wherein the pressure-sensitive adhesive layer of any one of the above is formed over at least one side of the support.

In the above-mentioned pressure-sensitive adhesive sheet, the pressure-sensitive adhesive layer may have the 90-degree peel adhesive strength (300 mm/min) of the pressure-sensitive adhesive layer to a non-alkali glass piece of 0.5 N/20-mm or more.

The above-mentioned pressure-sensitive adhesive sheet may be used in an optical member.

### EFFECT OF THE INVENTION

The methacryl-based polymer that is a main component in the pressure-sensitive adhesive composition of the invention is obtained by polymerizing monomer components containing 40 to 99.5% by weight of an alkyl methacrylate having at its side chain a C10-C18 alkyl group, and is a methacryl-based polymer having a glass transition temperature (Tg) of 0°C or lower. This pressure-sensitive adhesive composition of the invention satisfies bonding performance, and can realize a pressure-sensitive adhesive layer low in dielectric constant.

The pressure-sensitive adhesive layer of the invention satisfies a low dielectric constant. Thus, even when the pressure-sensitive adhesive layer of the invention is made thin and this thin layer is used as a pressure-sensitive adhesive layer applied to a transparent conductive film used in a touch panel in an electrostatic capacity manner, such application can be attained without changing the numerical value of the electrostatic capacity that has been designed for the electrostatic-capacity-manner touch panel.

BRIEF DESCRIPTION OF THE DRAWING

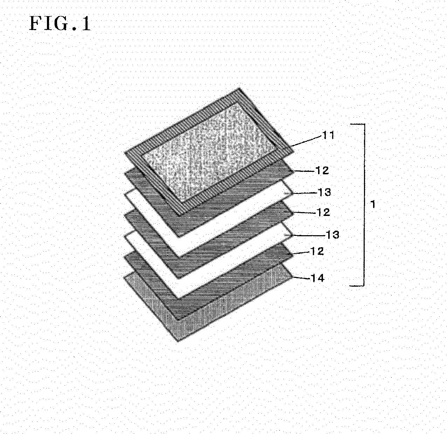

Fig. 1 is a view illustrating an example of an electrostatic-capacity-manner touch panel in which a pressure-sensitive adhesive layer or pressure-sensitive adhesive sheet of the invention is used.

MODE FOR CARRYING OUT THE INVENTION

The pressure-sensitive adhesive composition of the present invention contains a methacryl-based polymer obtained by polymerizing monomer components containing 40 to 99.5% by weight of an alkyl methacrylate having at its side chain a C10-C18 alkyl group, and having a glass transition temperature (Tg) of 0°C or lower.

The Tg of a homopolymer made of the alkyl methacrylate, which has at its side chain a C10-C18 alkyl group, ranges preferably from -80 to 40°C, more preferably from -60 to 0°C, even more preferably from -60 to -10°C. The homopolymer with the Tg of -80°C or lower is not easily available. The homopolymer with the Tg of higher than 40°C is not favorable in cohesive strength or adhesive strength. The Tg of the homopolymer is a value obtained by measuring the polymer by thermogravimetry-differential thermal analysis (TG-DTA). Respective Tgs of polymers are publically disclosed in various catalogues or the like.

The above-mentioned methacryl-based polymer preferably has a weight-average molecular weight of 400, 000 to 2, 500, 000.

Examples of the alkyl methacrylate, which has at its side chain a C10-C18 alkyl group, include lauryl methacrylate (the number of carbon atoms: 12, Tg: -65°C), tridecyl methacrylate

(the number of carbon atoms: 13, Tg: -40°C), stearyl methacrylate (the number of carbon atoms: 18, Tg: 38°C), isodecyl methacrylate (the number of carbon atoms: 10, Tg: -41°C), undecyl methacrylate (the number of carbon atoms: 11), tetradecyl methacrylate (the number of carbon atoms: 14), pentadecyl methacrylate (the number of carbon atoms: 15), hexadecyl methacrylate (the number of carbon atoms: 16), and heptadecyl methacrylate (the number of carbon atoms: 17).

About the methacryl-based monomer that is to give a homopolymer having a Tg of -80 to 40°C in the invention, the proportion thereof ranges from 40 to 99.5% by weight of all monomer components that are to form the methacryl-based polymer, preferably from 45 to 99.5% by weight thereof, even more preferably from 50 to 99% by weight thereof. When the proportion is 40% or more by weight, the resultant film is favorable from the viewpoint of being made lower in dielectric constant. When the proportion is 99.5% or less by weight, the resultant film is favorable from the viewpoint of adhesive strength or cohesive strength.

The monomer components, which is to form the (meth)acryl-based polymer in the invention, may further contain at least any one functional-group-containing monomer selected from carboxyl-group-containing monomers, hydroxyl-group-containing monomers and cyclic-ether-group-containing monomers.

As any one of the carboxyl-group-containing monomers, without any specific limitation, a monomer is usable which has a polymerizable functional group having an unsaturated double bound, such as a (meth) acryloyl group or vinyl group, and which further has a carboxyl group. Examples of the carboxyl-group-containing monomers include (meth) acrylic acid, carboxyethyl (meth)acrylate, carboxypentyl (meth)acrylate, itaconic acid, maleic acid, fumaric acid, crotonic acid, and isocrotonic acid. These are usable alone or in combination. About itaconic acid and maleic acid, anhydrides thereof may be used. Among these examples, acrylic acid and methacrylic acid are preferred, and acrylic acid is particularly preferred.

As any one of the hydroxyl-group-containing monomers, without any specific limitation, a monomer is usable which has a polymerizable functional group having an unsaturated double bound, such as a (meth) acryloyl group or vinyl group, and which further has a hydroxyl group. Examples of the hydroxyl-group-containing monomers include hydroxyalkyl (meth)acrylates such as 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate; and hydroxyalkylcycloalkane (meth)acrylates such as (4-hydroxymethylcyclohexyl)methyl (meth)acrylate. Other examples thereof include hydroxyethyl(meth)acrylamide, allyl alcohol, 2-hydroxyethyl vinyl ether, 4-hydroxybutyl vinyl ether, and diethylene glycol monovinyl ether. These can be used alone or in combination. Among these examples, hydroxyalkyl (meth)acrylates are preferred.

As any one of the cyclic-ether-group-containing monomers, without any specific limitation, a monomer is usable which has a polymerizable functional group having an unsaturated double bound, such as a (meth) acryloyl group or vinyl group, and which further has a cyclic ether group such as an epoxy group or oxetane group. Examples of the epoxy-group-containing monomer include glycidyl (meth)acrylate, 3,4-epoxycyclohexylmethyl (meth)acrylate, and 4-hydroxybutyl (meth)acrylate glycidyl ether. Examples of the oxetane-group-containing monomer include 3-oxetanylmethyl (meth)acrylate, 3-methyl-oxetanylmethyl (meth)acrylate, 3-ethyl-oxetanylmethyl (meth)acrylate, 3-butyl-oxetanylmethyl (meth)acrylate, and 3-hexyl-oxetanylmethyl (meth)acrylate. These can be used alone or in combination.

In the invention, the proportion of the above-mentioned one or more functional-group-containing monomers is, from the viewpoint of adhesive strength or cohesive strength, preferably 0.5% or more by weight of all the monomer components which are to form the (meth)acryl-based polymer, more preferably 1% or more by weight thereof. However, if the proportion of the functional-group-containing monomer(s) is too large, the composition may rise in viscosity, or gelate. Accordingly, the proportion of the functional-group-containing monomer(s) is preferably 30% or less by weight of all the monomer components, which are to form the (meth)acryl-based polymer, more preferably 25% or less by weight thereof, even more preferably 20% or less by weight thereof.

The monomer components, which are to form the methacryl-based polymer in the invention, may contain a copolymerizable monomer other than the functional-group-containing monomers. The copolymerizable monomer other than the above is, for example, a (meth) acryl-based monomer having at its side chain a C1 to C10 alkyl group. Specifically, the monomer is a (meth)acrylate represented by $CH_2=C(R^2)COOR^3$ wherein $R^2$ represents hydrogen or a methyl group, and $R^3$ represents a substituted or unsubstituted alkyl group having 1 to 10 carbon atoms.

The substituted or unsubstituted alkyl group having 1 to 10 carbon atoms, as $R^3$, denotes such an alkyl group in a linear or branched form, or such a cycloalkane in a cyclic form. In the case of the substituted alkyl group, its substituent is preferably an aryl group having 3 to 8 carbon atoms, or an aryloxy group having 3 to 8 carbon atoms. The aryl group is preferably a phenyl group although the group is not limited.

Examples of the monomer represented by the $CH_2=C(R^2)COOR^3$ include methyl (meth)acrylate, ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, decyl (meth)acrylate, phenoxyethyl (meth)acrylate, benzyl (meth)acrylate, cyclohexyl (meth)acrylate, 3,3,5-trimethylcyclohexyl (meth)acrylate, isobornyl (meth)acrylate, terpene (meth)acrylate, and cyclopentanyl (meth)acrylate. These are usable alone or in combination.

In the invention, the (meth) acrylate represented by the above-mentioned formula, $CH_2=C(R^2)COOR^3$, is usable in a proportion of 60% or less by weight of all the monomer components, which are to form the (meth)acryl-based polymer. The proportion is preferably 50% or less by weight, more preferably 40% or less by weight. The (meth)acrylate represented by the above-mentioned formula, $CH_2=C(R^2)COOR^3$, is used in a proportion preferably of 10% or more by weight, more preferably of 20% or more by weight from the viewpoint that the film maintains adhesive strength.

Furthermore, examples of a monomer that is to form the methacryl-based polymer in the invention include, an alkyl (meth) acrylate having at its side chain a branched alkyl chain having 3 to 10 carbon atoms. Examples of this alkyl (meth)acrylate, which has at its side chain a branched alkyl chain having 3 to 10 carbon atoms, include isopropyl (meth)acrylate, isobutyl (meth)acrylate, s-butyl (meth)acrylate, t-butyl (meth)acrylate, isopentyl (meth)acrylate, 2-ethylhexyl (meth)acrylate, isooctyl (meth)acrylate, isononyl (meth)acrylate, and isodecyl (meth)acrylate. In the invention, the alkyl (meth)acrylate, which has a branched alkyl chain having 3 to 10 carbon atoms, is usable in a proportion of 60% or less by weight of all the monomer components, which are to form the (meth)acryl-based polymer. The proportion is preferably 55% or less by weight, more preferably 50% or less by weight. The alkyl (meth) acrylate, which has at an end of ester group a branched alkyl chain having 3 to 10 carbon atoms, is used in a proportion preferably of 10% or more by weight, more preferably of 20% or more by weight from the viewpoint that the film maintains adhesive strength or the like.

As a different species of the copolymerizable monomer, for example, the following is usable: a vinyl monomer such as vinyl acetate, vinyl propionate, styrene, α-methylstyrene, N-vinylcaprolactam, or N-vinylpyrrolidone; a glycol acrylic ester monomer such as polyethylene glycol (meth)acrylate, polypropylene glycol (meth)acrylate, methoxyethylene glycol (meth)acrylate, or methoxypolypropylene glycol (meth)acrylate; an acrylic acid ester monomer such as tetrahydrofurfuryl (meth)acrylate, (meth)acrylate fluorine, (meth)acrylate silicone, or 2-methoxyethyl acrylate; or an amide-group-containing monomer, an amino-group-containing monomer, an imide-group-containing monomer, N-acryloylmorpholine, or a vinyl ether monomer.

Another species of the copolymerizable monomer is, for example, a silane type monomer containing a silicon atom. Examples of the silane type monomer include 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysialne, 10-methacryloyloxydecyltriethoxysialne, and 10-acryloyloxydecyltriethoxysialne.

The weight-average molecular weight of the methacryl-based polymer in the invention ranges preferably from 400, 000 to 2, 500, 000, more preferably from 600, 000 to 2, 200, 000. By making the weight-average molecular weight larger than 400,000, the pressure-sensitive adhesive layer can be caused to satisfy endurance, and is made small in cohesive strength so that the generation of an adhesive residue can be restrained. If the weight-average molecular weight is larger than 2, 500, 000, the pressure-sensitive adhesive layer tends to be lowered in bonding performance and adhesive power. Furthermore, in such a case, the pressure-sensitive adhesive composition may be too high in viscosity in a solution system to be applied. The weight-average molecular weight is a value obtained by making a measurement by GPC (gel permeation chromatography) and calculating the measured value into a value in terms of polystyrene.

The Tg of the methacryl-based polymer in the invention is preferably from -70 to 0°C, more preferably from -65 to -10°C. The use of such a (meth)acryl-based polymer makes it possible to make a pressure-sensitive adhesive composition obtained finally therefrom low in dielectric constant and good in adhesive strength. The Tg of the methacryl-based polymer is a theoretical value calculated out in accordance with the Fox equation from monomer units constituting the methacryl-based polymer, and the ratio therebetween.

For the production of the methacryl-based polymer, a known production method is appropriately selectable from solution polymerization, bulk polymerization, emulsion polymerization, and other various radical polymerizations. The resultant methacryl-based polymer may be any one of a random copolymer, a block copolymer, a graft copolymer, and other copolymers.

In the solution polymerization, for example, ethyl acetate or toluene is used as a polymerization solvent. In a specific example of the solution polymerization, reaction is conducted, with the addition of a polymerization initiator, in the flow of an inert gas such as nitrogen under reaction conditions that the temperature and the period therefor are usually about from 50 to 70°C and about from 5 to 30 hours, respectively.

The polymerization initiator, the chain transfer agent, the emulsifier, and others that are each used in the radical polymerization are not particularly limited, and may be appropriately selected to be used. The weight-average molecular weight of the (meth)acryl-based polymer is controllable in accordance with the polymerization initiator, the amount of the chain transfer agent used, and conditions for the reaction. In accordance with the types of these, the amounts thereof to be used are appropriately adjusted.

Examples of the polymerization initiator include, but are not limited to, azo initiators such as 2,2'-azobisisobutyronitrile, 2,2'-azobis(2-amidinopropan)dihydrochloride, 2,2'-azobis[2-(5-methyl-2-imidazoline-2-yl)propan]dihydrochloride, 2,2'-azobis(2-methylpropionamidine)disulfate, 2,2'-azobis(N,N'-dimethyleneisobutylamidine), and 2,2'-azobis[N-(2-carboxyethyl)-2-methylpropionamidine]hydrate (VA-057 manufactured by Wako Pure Chemical Industries, Ltd.); persulfates such as potassium persulfate and ammonium persulfate; peroxide initiators such as di(2-ethylhexyl) peroxydicarbonate, di(4-tert-butylcyclohexyl) peroxydicarbonate, di-sec-butyl peroxydicarbonate, tert-butyl peroxyneodecanoate, tert-hexyl peroxypivalate, tert-butyl peroxypivalate, dilauroyl peroxide, di-n-octanoyl peroxide, 1,1,3,3-tetramethylbutylperoxy-2-ethyl hexanoate, di(4-methylbenzoyl) peroxide, dibenzoyl peroxide, tert-butyl peroxyisobutyrate, 1,1-di(tert-hexylperoxy)cyclohexane, tert-butyl hydroperoxide, and hydrogen peroxide; and a redox system initiator including a combination of a peroxide and a reducing agent, such as a combination of a persulfate and sodium hydrogen sulfite or a combination of a peroxide and sodium ascorbate.

The above polymerization initiators may be used alone or in combination of two or more. The total content of the polymerization initiator(s) is preferably from about 0.005 to about 1 part by weight, more preferably from about 0. 02 to about 0.5 parts by weight, based on 100 parts by weight of the monomers.

For example, when the (meth)acryl-based polymer having a weight average molecular weight as stated above is produced using 2,2'-azobisisobutyronitrile as a polymerization initiator, the amount of the polymerization initiator is preferably from about 0.06 to about 0.2 parts by weight, more preferably from about 0.08 to about 0.175 parts by weight, based on 1.00 parts by weight of all monomers.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol. The chain transfer agents may be used alone or in combination of two or more. The total content of the chain transfer agent (s) should be about 0.1 parts by weight or less, based on 100 parts by weight of all monomers.

Examples of the emulsifier for use in emulsion polymerization include anionic emulsifiers such as sodium lauryl sulfate, ammonium lauryl sulfate, sodium dodecylbenzenesulfonate, ammonium polyoxyethylene alkyl ether sulfate, and sodium polyoxyethylene alkyl phenyl ether sulfate; and nonionic emulsifiers such as polyoxyethylene alkyl ether, polyoxyethylene alkyl phenyl ether, polyoxyethylene fatty acid ester, and polyoxyethylene-polyoxypropylene block polymers. These emulsifiers may be used alone or in combination of two or more.

The emulsifier may be a reactive emulsifier. Examples of such an emulsifier having an introduced radically-polymerizable functional group, such as a propenyl group or an allyl ether group, include AQUALON HS-10, HS-20, KH-10, BC-05, BC-10, and BC-20 (all manufactured by DAI-ICHI KOGYO SEIYAKU CO., LTD.) and ADEKA REASOAP SE10N (manufactured by ADEKA CORPORATION). The reactive emulsifier is preferred, because after polymerization, it can improve water resistance by being incorporated in the polymer chain. Based on 100 parts by weight of all monomers, the emulsifier is preferably used in an amount of 0.3 to 5 parts by weight, more preferably 0.5 to 1 part by weight, in view of polymerization stability or mechanical stability.

The methacryl-based polymer can be produced by irradiating the monomer components with ultraviolet rays, and thereby polymerizing the same. In this case, a photopolymerization initiator is incorporated into the monomer components. The photopolymerization initiator is not particularly limited as far as the initiator can initiate photopolymerization, and may be an ordinarily used photopolymerization initiator. The initiator may be, for example, of a benzoin ether, acetophenone, $\alpha$-ketol, optically active oxime, benzoin, benzyl, benzophenone, ketal, or thioxanthone type. The amount of the photopolymerization initiator used is from 0.05 to 1.5 parts by weight, preferably from 0.1 to 1 part by weight for 100 parts by weight of the monomer components.

The pressure-sensitive adhesive composition of the invention may contain a crosslinking agent. Examples of the crosslinking agent include isocyanate crosslinking agents, epoxy crosslinking agents, oxazoline crosslinking agents, and peroxides. These crosslinking agents are usable alone or in combination of two or more thereof. The crosslinking agent (s) is/are preferably one or more isocyanate crosslinking agents and/or epoxy crosslinking agents.

The crosslinking agents may be used alone or in the form of a mixture of two or more thereof. The content of the whole of the agent (s) is preferably 5 parts or less by weight for 100 parts by weight of the methacryl-based polymer. The content of the crosslinking agent (s) is preferably from 0.01 to 5 parts by weight, more preferably from 0.03 to 4 parts by weight.

The term "isocyanate crosslinking agent" refers to a compound having two or more isocyanate groups (which may include functional groups that are temporarily protected with an isocyanate blocking agent or by oligomerization and are convertible to isocyanate groups) per molecule.

Isocyanate crosslinking agents include aromatic isocyanates such as tolylene diisocyanate and xylene diisocyanate, alicyclic isocyanates such as isophorone diisocyanate, and aliphatic isocyanates such as hexamethylene diisocyanate.

More specifically, examples of isocyanate crosslinking agents include lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as a trimethylolpropane/tolylene diisocyanate trimer adduct (CORONATE L (trade name) manufactured by NIPPON POLYURETHANE INDUSTRY CO., LTD.), a trimethylolpropane/hexamethylene diisocyanate trimer adduct (CORONATE HL (trade name) manufactured by NIPPON POLYURETHANE INDUSTRY CO., LTD.), and an isocyanurate of hexamethylene diisocyanate (CORONATE HX (trade name) manufactured by NIPPON POLYURETHANE INDUSTRY CO., LTD.); trimethylolpropane adducts of xylylene diisocyanate (D110N (trade name) manufactured by Mitsui Chemicals, Inc.) or trimethylolpropane adducts of hexamethylene diisocyanate (D160N (trade name) manufactured by Mitsui Chemicals, Inc.); polyether polyisocyanate and polyester polyisocyanate; adducts thereof with various polyols; and polyisocyanates polyfunctionalized with an isocyanurate bond, a biuret bond, an allophanate bond, or the like. In particular, aliphatic isocyanates are preferably used because of their high reaction speed.

These isocyanate crosslinking agents may be used alone or in combination of two or more. The total content of the isocyanate compound crosslinking agent(s) is preferably from 0.01 to 5 parts by weight, more preferably from 0.03 to 4 parts by weight based on 100 parts by weight of the (meth) acryl-based polymer. The agent(s) can be appropriately incorporated, considering the cohesive strength, the inhibition of peeling-off in an endurance test, and others.

In an aqueous liquid in which a modified methacryl-based polymer produced by emulsion polymerization is dispersed, there is no need to use isocyanate crosslinking agent. If necessary, a blocked isocyanate crosslinking agent is usable since the agent reacts readily with water.

The above-mentioned epoxy crosslinking agents each denote a polyfunctional epoxy compound having, in a single molecule thereof, two or more epoxy groups. Examples of the epoxy crosslinking agents include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylol propane polyglycidyl ether, diglycidyl adipate, diglycidyl o-phthalate, triglycidyl-tris(2-hydroxyethyl)isocyanurate, resorcin diglycidyl ether, bisphenol-S-diglycidyl ether, and other epoxy resins each having in the molecule thereof two or more epoxy groups. The epoxy crosslinking agents may also be commercially available products such as products, with trade names "TETRAD C" and "TETRAD X", manufactured by Mitsubishi Gas Chemical Co., Inc.

The epoxy crosslinking agents may be used alone or in the form of a mixture of two or more thereof. The content of the whole of the epoxy crosslinking agent (s) is preferably from 0.01 to 5 parts by weight, more preferably from 0.03 to 4 parts by weight for 100 parts by weight of the methacryl-based polymer. The agent (s) can be appropriately incorporated, considering the cohesive strength, the inhibition of peeling-off in an endurance test, and others.

Any peroxide cross-linking agent capable of generating active radical species upon heating and capable of crosslinking the base polymer in the pressure-sensitive adhesive composition can be used appropriately. In view of workability or stability, a peroxide with a one-minute half-life temperature of 80°C to 160°C is preferably used, and a peroxide with a one-minute half-life temperature of 90°C to 140°C is more preferably used.

Examples of peroxides that can be used in the invention include di(2-ethylhexyl) peroxydicarbonate (one-minute half-life temperature: 90.6°C), di(4-tert-butylcyclohexyl) peroxydicarbonate (one-minute half-life temperature: 92.1°C), di-sec-butyl peroxydicarbonate (one-minute half-life temperature: 92.4°C), tert-butyl peroxyneodecanoate (one-minute half-life temperature: 103.5°C), tert-hexyl peroxypivalate (one-minute half-life temperature: 109.1°C), tert-butyl peroxypivalate (one-minute half-life temperature: 110.3°C), dilauroyl peroxide (one-minute half-life temperature: 116.4°C), di-n-octanoyl peroxide (one-minute half-life temperature: 117.4°C), 1,1,3,3-tetramethylbutylperoxy-2-ethyl hexanoate (one-minute half-life temperature: 124.3°C), di(4-methylbenzoyl) peroxide (one-minute half-life temperature: 128.2°C), dibenzoyl peroxide (one-minute half-life temperature: 130.0°C), tert-butyl peroxyisobutyrate (one-minute half-life temperature: 136.1°C), and 1,1-di(tert-hexylperoxy)cyclohexane (one-minute half-life temperature: 149.2°C). In particular, di(4-tert-butylcyclohexyl) peroxydicarbonate (one-minute half-life temperature: 92.1°C), dilauroyl peroxide (one-minute half-life temperature: 116.4°C), and dibenzoyl peroxide (one-minute half-life temperature: 130.0°C) are preferably used because they can provide higher crosslinking reaction efficiency.

The half life of a peroxide, which is an indicator of how fast the peroxide can be decomposed, refers to the time required for the remaining amount of the peroxide to reach one half of the original amount. The decomposition temperature required for a certain half life and the half life time obtained at a certain temperature are shown in catalogs furnished by manufacturers, such as Organic Peroxide Catalog, 9th Edition, May, 2003 furnished by NOF CORPORATION.

The above-mentioned peroxides may be used alone or in the form of a mixture of two or more thereof. The content of the whole of the peroxide(s) is from 0.02 to 2 parts by weight, preferably from 0.05 to 1 part by weight for 100 parts by weight of the methacryl-based polymer. The content is appropriately selected from in this range to adjust processability, reworkability, crosslinkage stability, peeling property and others.

As for a method for measuring peroxide decomposition amount remaining after the reaction treatment, the amount is measurable by, for example, HPLC (high-performance liquid chromatography).

More specifically, for example, each fragment is weighed out in a quantity of about 0.2 g from the pressure-sensitive adhesive composition after the reaction treatment. The fragment is immersed in 10 mL of ethyl acetate, and shaken in a shaker at 25°C and 120 rpm for 3 hours, and then the resultant is subjected to extraction. Thereafter, the resultant is allowed to stand still at room temperature for 3 days. Next, thereto is added 10 mL of acetonitrile. The resultant is shaken at 25°C and 120 rpm for 30 minutes, and filtrated through a membrane filter (0.45 $\mu$m). The resultant extract, the volume of which is about 10 $\mu$L, is poured into an HPLC to be analyzed. The analyzed amount concerned can be used as the peroxide amount after the reaction treatment.

As a crosslinking agent, an organic crosslinking agent or a polyfunctional metal chelate may be together used. As the organic crosslinking agent, the polyfunctional metal chelate is a compound in which a polyvalent metal is covalent-bonded or coordinate-bonded to an organic compound. Examples of the polyvalent metal atom include Al, Cr, Zr, Co, Cu, Fe, Ni, V, Zn, In, Ca, Mg, Mn, Y, Ce, Sr, Ba, Mo, La, Sn, and Ti. The atom to be covalent-bonded or coordinate-bonded in the organic compound is, for example, an oxygen atom. Examples of the organic compound include alkyl esters, alcohol compounds, carboxylic acid compounds, ether compounds, and ketone compounds.

The pressure-sensitive adhesive composition of the invention may contain a (meth) acryl-based oligomer in order to be improved in adhesive strength. It is preferred to use, as the (meth)acryl-based oligomer, a polymer higher in Tg and smaller in weight-average molecular weight than the (meth)acryl-based polymer in the invention. This (meth)acryl-based oligomer has advantages of functioning as an adhesiveness-giving resin, and further increasing the adhesive strength of the pressure-sensitive adhesive composition without raising the dielectric constant thereof.

About the (meth) acryl-based oligomer, it is desired that the Tg is from about 0 to 300°C both inclusive, preferably from about 20 to 300°C both inclusive, more preferably from about 40 to 300°C both inclusive. If the Tg is lower than about 0°C, the pressure-sensitive adhesive layer may be lowered in cohesive strength at room temperature or higher so as to be lowered in holding performance or in tackiness at high temperatures. The Tg of the (meth)acryl-based oligomer is a theoretical value calculated out on the basis of the Fox equation in the same manner as that for the Tg of the (meth)acryl-based polymer.

The weight-average molecular weight of the (meth)acryl-based oligomer is 1,000 or more and less than 30,000, preferably 1,500 or more and less than 20,000, even more preferably 2,000 or more and less than 10,000. If the weight-average molecular weight is 30,000 or more, the effect of improving the adhesive strength may not be sufficiently obtained. If the molecular weight is less than 1,000, the oligomer is low in molecular weight so that the oligomer may cause the pressure-sensitive adhesive composition to be lowered in adhesive strength or holding performance. In the invention, the weight-average molecular weight of the (meth)acryl-based oligomer may be gained in terms of polystyrene by the GPC method. Specifically, HPLC 8020, manufactured by Tosoh Corp., two columns TSKgelGMH-H(20) are used to determine the weight-average molecular weight, by aid of a tetrahydrofuran solvent under a condition that the flow rate is about 0. 5 mL/min.

Examples of a monomer that constitutes the (meth)acryl-based oligomer include alkyl (meth)acrylates, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, 2-ethylhexyl (meth)acrylate, heptyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate; esters each made from (meth) acrylic acid and an alicyclic alcohol, such as cyclohexyl (meth)acrylate, and isobornyl (meth)acrylate; aryl (meth)acrylates, suchasphenyl (meth)acrylate, and benzyl (meth)acrylate; and (meth)acrylates each obtained from a terpene compound derivative alcohol. Such (meth) acrylates are usable alone or in combination of two or more thereof.

The (meth)acryl-based oligomer preferably contains, as a monomer unit, an acryl-based monomer having a relatively bulky structure, typical examples of which include: an alkyl (meth) acrylate in which the alkyl group has a branched structure, such as isobutyl (meth) acrylate, or t-butyl (meth) acrylate; an ester made from (meth)acrylic acid and an alicyclic alcohol, such as cyclohexyl (meth)acrylate or isobornyl (meth) acrylate; or a (meth)acrylate having a cyclic structure, such as phenyl (meth)acrylate, benzyl (meth)acrylate or any other aryl (meth)acrylate. By causing a (meth)acryl-based oligomer to have such a bulky structure, the pressure-sensitive adhesive layer can be further improved in tackiness. From the viewpoint of bulkiness, the (meth)acryl-based oligomer having, in particular, a cyclic structure is high in this advantageous effect. One having plural rings is higher in this advantageous effect. In the case of adopting ultraviolet rays (ultraviolet rays) in the synthesis of the (meth) acryl-based oligomer or in the formation of the pressure-sensitive adhesive layer, the oligomer preferably have a saturated bond since the oligomer does not easily cause polymerization inhibition. It is preferred to use, as a monomer constituting the (meth)acryl-based oligomer, an alkyl (meth)acrylate in which the alkyl group has a branched structure, or an ester made from (meth)acrylic acid and an alicyclic alcohol.

From such viewpoints, preferred examples of the (meth)acryl-based oligomer include copolymers made, respectively, from cyclohexyl methacrylate (CHMA) and isobutyl methacrylate (IBMA), from cyclohexyl methacrylate (CHMA) and isobornyl methacrylate (IBXMA), from cyclohexyl methacrylate (CHMA) and acryloylmorpholine (ACMO), from cyclohexyl methacrylate (CHMA) and diethyl acrylamide (DEAA), from 1-adamantyl acrylate (ADA) and methyl methacrylate (MMA), and from dicyclopentanyl methacrylate (DCPMA) and isobornyl methacrylate (IBXMA); and homopolymers each made from dicyclopentanyl methacrylate (DCPMA), cyclohexyl methacrylate (CHMA), isobornyl methacrylate (IBXMA), isobornyl acrylate (IBXA), dicyclopentanyl acrylate (DCPA), 1-adamantyl methacrylate (ADMA), or 1-adamantyl acrylate (ADA). Among these examples, an oligomer containing, as a main component, cyclohexyl methacrylate (CHMA) is particularly preferred.

When the (meth)acryl-based oligomer is used in the pressure-sensitive adhesive composition of the invention, the content thereof is not particularly limited and is preferably 70 parts or less by weight, more preferably from 1 to 70 parts by weight, even more preferably from 2 to 50 parts by weight, even more preferably from 3 to 40 parts by weight for 100 parts by weight of the methacryl-based polymer. If the addition amount of the (meth)acryl-based oligomer is more than 70 parts by weight, the composition becomes high in elastic modulus to cause an inconvenience of being deteriorated in tackiness at low temperatures. It is effective for the effect of improving the adhesive strength to blend 1 part or more by weight of the (meth)acryl-based oligomer.

The pressure-sensitive adhesive composition of the invention may further contain a silane coupling agent in order that when the pressure-sensitive adhesive layer is applied to a hydrophilic adherend such as a glass piece, the interlayer therebetween can be improved in water resistance. The blend amount of the silane coupling agent is preferably 1 part or less by weight, more preferably from 0.01 to 1 part by weight, even more preferably from 0.02 to 0.6 parts by weight for 100 parts by weight of the (meth)acryl-based polymer. If the silane coupling agent is blended in an excessively large amount, the adhesive strength of the pressure-sensitive adhesive layer is increased onto a glass piece so as to be poor in re-peeling property. If the agent is blended in an excessively small amount, the pressure-sensitive adhesive layer is unfavorably declined in endurance.

Preferably usable examples of the silane coupling agent include epoxy-group-containing silane coupling agents such as 3-glycidoxypropyltrimethoxysilane, 3-glycidoxypropyltriethoxysilane, 3-glycidoxypropylmethyldiethoxysilane, and 2-(3,4 epoxycyclohexyl)ethyltrimethoxysilane; amino-group-containing silane coupling agents such as 3-aminopropyltrimethoxysilane, N-2-(aminoethyl)-3-aminopropylmethyldimethoxysilane, 3-triethoxysilyl-N-(1,3-dimethylbutylidene)propylamine, and N-phenyl-γ-aminopropyltrimethoxysilane; (meth)acrylic-group-containing silane coupling agents such as 3-acryloxypropyltrimethoxysilane, and 3-methacryloxypropyltriethoxysilane; and isocyanate-group-containing silane coupling agents such as 3-isocyanatepropyltriethoxysilane.

The pressure-sensitive adhesive composition of the invention may further contain other known additives. In accordance with a purpose of using the composition, for example, the following may be appropriately added: a colorant, a powder such as pigment, a dye, a surfactant, a plasticizer, a tackifier, a surface lubricant, a leveling agent, a softener, an antioxidant, an anti-aging agent, a light stabilizer, an ultraviolet absorbent, a polymerization inhibitor, an inorganic or organic filler, a metallic powder, and a particulate or foil-form matter.

The pressure-sensitive adhesive layer of the invention is made of the pressure-sensitive adhesive composition.

The thickness of the pressure-sensitive adhesive layer is not particularly limited, and is, for example, from about 1 to 100 $\mu$m. The thickness is preferably from 2 to 50 $\mu$m, more preferably from 2 to 40 $\mu$m, even more preferably from 5 to 35 $\mu$m.

About the pressure-sensitive adhesive layer of the invention, the relative dielectric constant is preferably 3.5 or less, more preferably 3.3 or less, even more preferably 3.2 or less at a frequency of 100 kHz.

The gel fraction of the pressure-sensitive adhesive layer of the invention is preferably from 20 to 98% by weight. The gel fraction of the pressure-sensitive adhesive layer is more preferably from 25 to 95% by weight, even more preferably from 30 to 95% by weight. When the pressure-sensitive adhesive composition contains a crosslinking agent, the gel fraction can be controlled by the adjustment of the addition amount of the entire crosslinking agent under a sufficient consideration about influences of the temperature and period for the crosslinking treatment. If the gel fraction is small, the pressure-sensitive adhesive composition or layer may be poor in cohesive strength. If the gel fraction is too large, it may be poor in adhesive strength. The pressure-sensitive adhesive layer having such a gel fraction exhibits features that after bonded onto an adherend, the layer is very small in adhesive strength-rise, and that even after bonded thereto for a long time, the layer is easily peelable without giving an adhesive residue.

The pressure-sensitive adhesive layer of the invention preferably has a haze value of 2% or less when the thickness thereof is 25 $\mu$m. When the haze value is 2% or less, the pressure-sensitive adhesive layer can satisfy a transparency required in a case where the layer is used in an optical member. The haze value is preferably from 0 to 1.0%, more preferably from 0 to 0.5%. When the haze value is 2% or less, the pressure-sensitive adhesive layer may be satisfactory for use in an optical article. If the haze value is more than 2%, the layer gets cloudy to be unsuitable for use in an optical film.

The pressure-sensitive adhesive layer can be formed into an pressure-sensitive adhesive sheet, for example, by applying the pressure-sensitive adhesive composition onto a support and then drying the polymerization solvent and others therein to be removed. In the application of the pressure-sensitive adhesive composition, newly, one or more solvents other than the polymerization solvent may be appropriately added thereto.

As the method for applying the pressure-sensitive adhesive composition, various methods are usable. Specific examples of the methods include roll coating, kiss roll coating, gravure coating, reverse coating, roll brushing, spray coating, dip roll coating, bar coating, knife coating, air knife coating, curtain coating, lip coating, and extrusion coating methods by a die coater, etc.

The temperature for the above-mentioned heating and drying is preferably from 40 to 200°C, more preferably from 50 to 180°C, in particular preferably from 70 to 170°C. By setting the heating temperature in the range, a pressure-sensitive adhesive layer having excellent adherability can be obtained. About the drying period, a proper period may be appropriately adopted. The drying period is preferably from 5 seconds to 20 minutes, more preferably from 5 seconds to 10 minutes, in particular preferably from 10 seconds to 5 minutes.

When the (meth)acryl-based polymer in the invention is produced by polymerizing monomer components by the radiation of ultraviolet rays thereto, the formation of the pressure-sensitive adhesive layer can be attained together with the production of the (meth)acryl-based polymer from the monomer components. The monomer components may appropriately contain a material miscible with the above-mentioned adhesive composition, such as a crosslinking agent. In the radiation of the ultraviolet rays, the monomer components is usable in the state that the matter is beforehand partially polymerized into a syrup form. For the radiation of the ultraviolet rays, for example, a high-pressure mercury lamp, a low-pressure mercury lamp, or a metal halide lamp is usable.

The above-mentioned support may be, for example, a release-treated sheet. The release-treated sheet is preferably a silicone releasable liner.

About an pressure-sensitive adhesive sheet in which the pressure-sensitive adhesive layer is formed on the release-treated sheet, this pressure-sensitive adhesive layer may be, when exposed, protected with a release-treated sheet (separator) until the pressure-sensitive adhesive sheet is put into practical use. In the practical use, the release-treated sheet is peeled off.

Examples of the material used to form such a separator include a plastic film such as a polyethylene, polypropylene, polyethylene terephthalate, or polyester film, a porous material such as paper, fabric, or nonwoven fabric, and appropriate thin materials such as a net, a foamed sheet, a metal foil, and a laminate thereof. A plastic film is advantageously used because of its good surface smoothness.

Such a plastic film may be of any type capable of protecting the pressure-sensitive adhesive layer. For example, such a plastic film may be a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, or an ethylene-vinyl acetate copolymer film.

The separator generally has a thickness of about 5 to about 200 $\mu$m, preferably about 5 to about 100 $\mu$m. If necessary, the separator may be subjected to a release treatment and an anti-pollution treatment with a silicone, fluoride, long-chain alkyl, or fatty acid amide release agent, silica powder or the like, or subjected to an antistatic treatment of coating type, kneading and mixing type, vapor-deposition type, or the like. In particular, when the surface of the separator is appropriately subjected to a release treatment such as a silicone treatment, a long-chain alkyl treatment, or a fluorine treatment, the releasability from the pressure-sensitive adhesive layer can be further improved.

Preferably, the pressure-sensitive adhesive layer and the pressure-sensitive adhesive sheet of the invention are each applied to an optical member. In particular, these are each preferably used in order to be bonded to a metal thin film or a metal electrode in any optical article. The metal thin film may be a thin film made of a metal, a metal oxide, or a mixture of these materials. The thin film is not particularly limited, and is, for example, a thin film made of ITO (indium tin oxide), ZnO, SnO or CTO (cadmium tin oxide). The thickness of the metal thin film is not particularly limited, and is from about 10 to 200 nm. Usually, a metal thin film made of, e.g., ITO is laid on a transparent plastic film substrate, such as a polyethylene terephthalate film (particularly, a PET film) ; and in this state, the metal thin film is used as a transparent conductive film. When the pressure-sensitive adhesive sheet of the invention is bonded to the metal thin film, it is preferred to use the sheet in the state of rendering the pressure-sensitive adhesive layer side surface of the sheet an adhesive surface thereof to be bonded to the metal thin film.

The metal electrode needs only to be an electrode made of a metal, a metal oxide or a mixture of these materials. The electrode is not particularly limited, and may be, for example, an ITO, silver, copper, or CNT (carbon nanotube) electrode.

About the pressure-sensitive adhesive sheet of the invention, the 90-degree peel adhesive strength (300 mm/min) of its pressure-sensitive adhesive layer to a non-alkali glass piece is preferably 0.5 N/20-mm or more. The 90-degree peel adhesive strength is preferably 1.0 N/20-mm or more.

A specific example of an article to which the pressure-sensitive adhesive sheet of the invention is applied is a useful-for-touch-panel pressure-sensitive adhesive sheet, which is used to produce a touch panel. This useful-for-touch-panel adhesive sheet is used in the production of, for example, a touch panel in an electrostatic capacity manner to bond a transparent conductive film on which a metal thin film made of ITO or the like is laid onto, for example, a polymethyl methacrylate (PMMA) plate, a hard coat film or a glass lens. The touch panel, which is not particularly limited, is used in, for example, a portable telephone, a tablet computer or a portable information terminal.

In Fig. 1 is illustrated a more specific example of an electrostatic-capacity-manner touch panel in which adhesive layers or adhesive sheets of the invention are used. In Fig. 1, reference number 1 represents an electrostatic-capacity-manner touch panel; 11, a decorative panel; 12, the pressure-sensitive adhesive layers or adhesive sheets; 13, ITO films; and 14, a hard coat film. The decorative panel 11 is preferably a glass plate or a transparent acrylic plate (PMMA plate). The ITO films 13 are each preferably a film in which an ITO film is laid on a glass plate or transparent plastic film (particularly, a PET film). The hard coat film 14 is preferably a film in which a transparent plastic film, such as a PET film, is subjected to hard coat treatment. In the electrostatic-capacity-manner touch panel 1, the pressure-sensitive adhesive layers or adhesive sheets of the invention are used; accordingly, the panel can be made thin, and is excellent in operation stability. The panel is also good in external appearance and image-perceptibility.

As a support of the pressure-sensitive adhesive sheet of the invention, an optical member is usable. The above-mentioned pressure-sensitive adhesive layer can be formed in an optical member by applying the pressure-sensitive adhesive layer directly onto the optical member and then drying the polymerization solvent and others therein to be removed. An pressure-sensitive adhesive-type optical member can be formed by transferring the pressure-sensitive adhesive layer formed on a release-treated separator appropriately onto an optical member.

The release-treated sheet, which is used to form the pressure-sensitive adhesive-type optical member, is usable, as it is, as a separator of the pressure-sensitive adhesive-type optical member. Thus, the process concerned can be simplified.

At the time of forming, for the pressure-sensitive adhesive-type optical member, the formation of the pressure-sensitive adhesive layer can be attained after an anchor layer is laid on a surface of an optical member or this surface is subjected to an easily-bondable treatment that may be of various type, such as corona treatment or plasma treatment. The front surface of the pressure-sensitive adhesive layer may be subjected to an easily-bondable treatment.

The pressure-sensitive adhesive-type optical member of the invention is usable as a pressure-sensitive transparent conductive film with the pressure-sensitive adhesive-layer in which a transparent conductive film is used as an optical member. The transparent conductive film has, on one of both the surfaces of its transparent plastic film substrate, a transparent conductive thin film that is to be a metal thin film, as described above, made of ITO or the like. The transparent conductive film has, on the other surface of the transparent plastic film substrate, a pressure-sensitive adhesive layer of the invention. The transparent conductive thin film may be laid over the transparent plastic film substrate to interpose an undercoat layer therebetween. Plural undercoat layers may be laid. An oligomer shift preventing layer may be laid between the transparent plastic film substrate and the pressure-sensitive adhesive layer.

The transparent plastic film substrate is not particularly limited, and may be a plastic film that may be of various types having transparency. The plastic film is a mono-layered film. Examples of the material thereof include polyester resins such as polyethylene terephthalate, and polyethylene naphthalate, acetate resins, polyethersulfone resins, polycarbonate resins, polyamide resins, polyimide resins, polyolefin resins, (meth)acrylic resins, polyvinyl chloride resins, polyvinylidene chloride resins, polystyrene resins, polyvinyl alcohol resins, polyarylate resins, and polyphenylene sulfide resins. Among these resins, particularly preferred are polyester resins, polyimide resins, and polyethersulfone resins. The thickness of the film substrate is preferably from 15 to 200 $\mu$m.

A surface of the film substrate may be beforehand subjected to sputtering, corona discharge, flaming, ultraviolet radiation, electron beam radiation, or etching treatment such as chemical or oxidizing etching, or a primer coating treatment to improve the adhesion of a transparent conductive thin film or undercoat layer to be laid thereon to the film substrate. Before the transparent conductive thin film or undercoat layer is laid, the surface may be subjected to dust/dirt-removal or clarification by solvent cleaning, ultrasonic cleaning or some other if necessary.

The constituent material and the thickness of the transparent conductive thin film are not particularly limited, and are the same as demonstrated about the above-mentioned metal thin film. The undercoat layer may be made of an inorganic substance, an organic substance, or a mixture of an inorganic substance and an organic substance. Examples of the inorganic substance include NaF (1.3), $Na_3AlF_6$ (1.35), LiF (1.36), $MgF_2$ (1.38), $CaF_2$ (1.4), $BaF_2$ (1.3), $SiO_2$ (1.46), $LaF_3$ (1.55), $CeF_3$ (1.63), and $Al_2O_3$(1.63), in each of which a numerical value inside its parentheses is the refractive index thereof to light, and other inorganic substances. Among these substances, $SiO_2$, $MgF_2$, $Al_2O_3$ and others are preferred. Particularly preferred is $SiO_2$. Another example of the inorganic substance is any multiple oxide which contains indium oxide and further contains about 10 to 40 parts by weight of cerium oxide and about 0 to 20 parts by weight of tin oxide for the weight of indium oxide.

Examples of the organic substance include acrylic resins, urethane resins, melamine resins, alkyd resins, siloxane polymers, and organic silane condensates. About these organic substances, at least one thereof is used. The organic substance is in particular preferably a thermosetting resin made of a mixture of a melamine resin, an alkyd resin and an organic silane condensate.

The thickness of the undercoat layer is not particularly limited, and is usually from about 1 to 300 nm, preferably from 5 to 300 nm from the viewpoint of an optical design (of the optical member), and the prevention of the generation of an oligomer from the film substrate.

The above-mentioned transparent conductive film with the pressure-sensitive adhesive-layer is usable for, for example, the formation of various devices such as a touch panel and a liquid crystal display. The film is preferably usable, in particular, as an electrode plate for a touch panel. Any touch panel is preferably usable for various detecting manners (such as a resistance film manner and an electrostatic capacity manner).

In an electrostatic-capacity-manner touch panel, usually, a transparent conductive film with a transparent conductive thin film having a predetermined pattern shape is formed on the entire front surface of a display section of a display. In the above-mentioned transparent conductive film with the adhesive-layer, its adhesive layer and a patterned transparent conductive thin film are appropriately laminated onto each other to be faced to each other.

The pressure-sensitive adhesive-type optical member of the invention is usable as an optical film with a pressure-sensitive adhesive layer in which an optical film for an image display device is used as an optical member.

The optical film used may be a film for forming an image display device such as a liquid crystal display device or an organic EL display device. The film is not particularly limited in type. The optical film is, for example, a polarizing plate. The polarizing plate may be generally a plate having, on one or each of the two surfaces of a polarizer, a transparent protective film.

The polarizer is not particularly limited, and may be of various types. Examples of the polarizer include a polarizer in which a dichroic material, such as iodine or a dichroic dye, adsorbed into a hydrophilic polymer film is uniaxially drawn, examples of this film including a polyvinyl alcohol film, a partially formalized polyvinyl alcohol film, and an ethylene/vinyl acetate copolymer partially-saponified film; and a polyene aligned film made of, for example, a dehydrated product of polyvinyl alcohol or a de-hydrochloride product of polyvinyl chloride. Among such polarizers, preferred is a polarizer composed of a polyvinyl alcohol film and a dichroic substance such as iodine. The thickness of such a polarizer is not particularly limited, and is generally from about 5 to 80 $\mu$m.

The polarizer in which a polyvinyl alcohol film dyed with iodine is uniaxially drawn can be formed, for example, by immersing polyvinyl alcohol into an aqueous solution of iodine to be dyed therewith, and then drawing the resultant into a length 3-7 times the original length. If necessary, polyvinyl alcohol may be immersed into, for example, an aqueous solution of potassium iodide that may contain boric acid, zinc sulfate or zinc chloride, etc. Furthermore, before dyed, the polyvinyl alcohol film may be immersed into water to be cleaned therewith if necessary. The cleaning of the polyvinyl alcohol film with water makes it possible to clean stains on the surfaces of the polyvinyl alcohol film or the blocking inhibitor thereon, and also produces an advantageous effect of swelling the polyvinyl alcohol film to prevent an unevenness in the dyeing, or some other unevenness. The drawing may be performed after the film is dyed with iodine, while the film is dyed therewith, or before the film is dyed therewith. The drawing may be performed in an aqueous solution of boric acid, potassium iodide or some other, or in a water bath.

An example of the material constituting the transparent protective film may be a thermoplastic resin excellent in, for example, transparency, mechanical strength, thermal stability, water blocking performance, and isotropy. Specific examples of the thermoplastic resin include cellulose resins such as triacetylcellulose, polyester resins, polyethersulfone resins, polysulfone resins, polycarbonate resins, polyamide resins, polyimide resins, polyolefin resins, (meth)acrylic resins, cyclic polyolefin resins (norbornene resins), polyarylate resins, polystyrene resins, polyvinyl alcohol resins, and mixtures of two or more thereof. The transparent protective film is bonded onto one of the two sides of the polarizer through a bonding agent layer. For a transparent protective film onto the other side thereof, a thermosetting resin or ultraviolet-ray curing type resin is usable which is, for example, of a (meth)acrylic, urethane, acrylic urethane, epoxy or silicone type. The transparent protective films may contain one or more appropriate additives that may be arbitrarily selected. Examples of the additives include an ultraviolet absorbent, an antioxidant, a lubricant, a plasticizer, a release agent, a coloration inhibitor, a flame retardant, a nucleating agent, an antistatic agent, a pigment and a colorant. The content by percentage of the above-mentioned thermoplastic resin in the (former) transparent protective film is preferably from 50 to 100% by weight, more preferably from 50 to 99% by weight, even more preferably from 60 to 98% by weight, in particular preferably from 70 to 97% by weight. If the content by percentage of the thermoplastic resin in the transparent protective film is 50% or less by weight, a high transparency and others which the thermoplastic resin originally has might not be sufficiently exhibited.

Other examples of the optical film include a reflector, a semi-transmissible plate, a retardation plate (examples thereof including wavelength plates, such as a half wavelength plate and a quarter wavelength plate), an optical compensation film, a visual compensation film, a brightness enhancement film, and films which are each to be an optical layer used to form a liquid crystal display device or some other device. These members may be used alone as the optical film; besides, when put into practical use, one of the members, or two or more thereof are usable in the state of being laminated into the form of a layer, or two or more layers onto a polarizing plate as described above.

The optical film, in which optical layers as described just above are laminated onto a polarizing plate, may be formed in the manner of laminating these layers successively and independently in the process of producing a liquid crystal display device or some other device. However, the optical film that is a film formed by laminating such optical layers beforehand is excellent in quality stability, fabricating workability and others to have an advantage of possibly improving a process for producing a liquid crystal display device or some other device. For the laminating, an appropriate bonding means, such as a pressure-sensitive adhesive layer, is usable. When the polarizing plate described just above is bonded to the optical layers, which are different therefrom, an optical axis of these members may be adjusted to an appropriate set-up angle in accordance with a target retardation property or some other of the resultant.

The optical film with the pressure-sensitive adhesive layer of the invention is preferably usable to form various image display devices such as a liquid crystal display device. The formation of the liquid crystal display device may be in accordance with a conventional method. Specifically, a liquid crystal display device is generally formed, for example, by fabricating a liquid crystal cell, an optical film with a pressure-sensitive adhesive layer, and optional constituent members, such as a lighting system, appropriately, and then integrating a driving circuit into the fabricated workpiece; in the invention, the method for forming a liquid crystal display device is not particularly limited, and may be in accordance with a conventional method as far as the optical film with the pressure-sensitive adhesive layer of the invention is used therein. Its liquid crystal cell may be of any type, for example, a TN, STN, $\pi$, VA, or IPS type.

An appropriate liquid crystal display device can be formed, examples thereof including a liquid crystal display device in which optical film with the pressure-sensitive adhesive layer is arranged on one or each of both the sides of a liquid crystal cell, and a display device in which a backlight or reflector is used as a lighting system. In this case, the optical film according to the invention may be set onto one or each of the sides of the liquid crystal cell. When the optical films are arranged on both the sides, respectively, the films may be the same or different. Furthermore, when the liquid crystal display device is formed, for example, one or more appropriate members may be arranged in the form of one or more layers at one or more appropriate positions, examples of the members including a diffusing plate, an anti-glare layer, an anti-reflection film, a protective plate, a prism array, a lens array sheet, a light diffusion plate, and a backlight.

EXAMPLES

Hereinafter, the invention will be specifically described by way of examples. However, the invention is not limited by these examples. In each of examples, the word "parts(s)" and the symbol "%" denote part(s) by weight and % by weight, respectively. For an evaluation item in the examples and the others, a measurement was made as follows.

<Measurement of Weight-Average Molecular Weight>

The weight-average molecular weight of any obtained (meth)acryl-based polymer was measured by GPC (gel permeation chromatography). As a sample thereof, the following was used: a filtrate obtained by dissolving the polymer for the sample into tetrahydrofuran to give a 0.1%-by-weight solution thereof, allowing this solution to stand still all night, and then filtrating the solution through a membrane filter of 0.45 $\mu$m mesh.

- Analyzer: HLC-8120 GPC manufactured by Tosoh Corp.
- Columns: manufactured by Tosoh Corp.,

GM7000H$_{XL}$ + GMH$_{XL}$ + GMH$_{XL}$ for (meth) acryl-based polymer
G3000HXL + 2000HXL + G1000HXL for aromatic polymer

- Each column size: 7.8 mm in diameter x 30 cm; 90 cm in total
- Eluent: tetrahydrofuran (concentration: 0.1% by weight)
- Flow rate: 0.8 mL/min
- Inlet pressure: 1.6 MPa
- Detector: Refractive Index Detector (RI)
- Column temperature: 40°C

- Injected volume: 100 $\mu$L
- Eluent: tetrahydrofuran
- Detector: Refractive Index Detector
- Standard sample: polystyrene

Example 1

<Preparation of Methacryl-based Polymer>

Into a four-necked flask equipped with stirring blade, a thermostat, a nitrogen gas introducing tube, and a condenser were charged 100 parts by weight of lauryl methacrylate (LMA), 1 part by weight of 4-hydroxybutyl acrylate (HBA), and 0.1 part by weight of 2,2'-azobisisobutyronitrile as a polymerization initiator together with 200 parts by weight of ethyl acetate. While the liquid mixture was mildly stirred, nitrogen gas was introduced thereinto to purge the inside air with nitrogen for 1 hour. Thereafter, while the temperature of the liquid inside the flask was kept near 60°C, a polymerization reaction was caused for 15 hours to prepare a solution of methacryl-based polymer having a weight-average molecular weight of 900,000.

Next, into the thus obtained methacryl-based polymer solution was incorporated a trimethylolpropane adduct of xylylenediisocyanate (trade name: D110N, manufactured by Mitsui Chemicals, Inc.), as a crosslinking agent, in an amount of 0.5 parts by weight for 100 parts by weight of any solid in the polymer. In this way, a pressure-sensitive adhesive composition solution was prepared.

Next, prepared was a silicone-treated polyethylene terephthalate (PET) film (DIAFOIL MRF38, manufactured by Mitsubishi Polyester Film Corp.) 38 $\mu$m in thickness; and the resultant pressure-sensitive adhesive composition solution was applied onto the silicone-treated surface of the film so that a 25 $\mu$m thick adhesive layer could be formed after drying. The resultant workpiece was dried at 130°C for 3 minutes to form the pressure-sensitive adhesive layer. In this way, each pressure-sensitive adhesive sheet was formed.

Examples 2-6, and Comparative Examples 1-4

Pressure-sensitive adhesive sheets were each formed in the same way as in Example 1 except that the respective kinds of the monomers used to prepare the methacryl-based polymer, the composition ratio therebetween, the kind of the crosslinking agent, and the incorporation amount of the agent were each changed to a value shown in Table 1. Table 1 shows the respective compositions of the resultant pressure-sensitive adhesive sheet species; the molecular weight and the glass transition temperature of each of the respective constituent polymers thereof; and the respective dielectric constants, adhesive strengths, gel fractions, respective total light transmittances and respective hazes thereof.

The pressure-sensitive adhesive sheets (samples) obtained in each of the examples and the comparative examples were evaluated as described below. Results of the evaluation are shown in Table 1.

<Measurement of Gel Fraction>

A predetermined amount (initial weight: W1) from the pressure-sensitive adhesive layer in any one of the pressure-sensitive adhesive sheets was taken out, immersed in an ethyl acetate solution, and then allowed to stand still at room temperature for one week. Therefrom, an insoluble content was then taken out, and dried. The weight (W2) of the dried content was measured, and then the gel fraction was calculated in accordance with the following formula.

$$\text{Gel fraction} = (W2/W1) \times 100$$

<Dielectric Constant>

Four of the pressure-sensitive adhesive layers (each obtained by peeling off the silicone-treated PET film from any one of the adhesive sheets) were laminated onto each other to form each laminated pressure-sensitive adhesive layer about 100 $\mu$m in thickness. Any one of the laminated pressure-sensitive adhesive layers was sandwiched between a copper foil piece and an electrode, and the relative dielectric constant thereof was measured at a frequency of 100 kHz, using a device described below. In the measurement, the average of the measured values of three out of the samples was used as the dielectric constant.

The measurement of the relative dielectric constant of the pressure-sensitive adhesive layer at a frequency of 100 kHz was made in accordance with JIS K 6911 under the following conditions.

Measuring method: volumetric method (used device: Agilent Technologies 4294A Precision Impedance Analyzer)
Electrode structure: aluminum 12.1 mm in diameter and 0.5 mm in thickness
Counter electrode: 3oz copper plate
Measuring environment: 23 $\pm$ 1°C, and 52 $\pm$ 1% RH

<Adhesive Strength>

A PET film 25 $\mu$m in thickness (LUMIRROR S10, manufactured by Toray Industries Inc.) was bonded onto a pressure-sensitive adhesive surface of any one of the samples obtained in each of the examples and the comparative examples. The resultant was used as an evaluating sample. This evaluating sample was cut into a size of 20 mm width x about 100 mm length. Therefrom, the silicone-treated PET film was then peeled, and the rest was bonded onto a non-alkali glass plate 0.5 mm in thickness (1737, manufactured by Corning Inc.) by one reciprocating movement of a 2-kg roller. The resultant was allowed to stand still at room temperature (23°C) for 1 hour, and then the peeling adhesion thereof was measured at a peeling angle of 90 degrees and a peeling rate of 300 mm/min.

<Haze>

Any one of the pressure-sensitive adhesive sheets obtained in each of the examples and the comparative examples was bonded onto one surface of a non-alkali glass piece having a total light transmittance of 99.3% and a haze of 0.1%. A haze meter (MR-100, manufactured by Murakami Color Research Laboratory Co. , Ltd.) was used to measure the haze and the total light transmittance thereof. In the measurement with the haze meter, the pressure-sensitive adhesive sheet was arranged to be faced to the light source. Since the haze value of the non-alkali glass piece was 0.1%, a value obtained by subtracting 0.1% from the measured value was defined as the target haze value. As the total light transmittance (%), the measured value was adopted.

[Table 1]

| | Composition | Crosslinking agent | The number of parts of crosslinking agent | Molecular weight (x 10000) | Dielectric constant | Adhesive strength | Gel fraction | Haze | Total light transmittance | Tg (°C) |
|---|---|---|---|---|---|---|---|---|---|---|
| Example 1 | LMA/HBA = 100/1 | D110N | 0.5 | 74 | 2.43 | 8.4 | 79.7 | 0.3 | 92.6 | -65 |
| Example 2 | TDMA/HBA = 100/1 | D110N | 0.5 | 68 | 2.34 | 3.0 | 78.2 | 0.2 | 93.4 | -40 |
| Example 3 | STMA/2EHA/HBA = 60/40/1 | D110N | 1.5 | 66 | 2.61 | 3.6 | 84.2 | 1.6 | 93.1 | -50 |
| Example 4 | TDMA/2EHA/HBA = 70/30/1 | D110N | 0.5 | 70 | 2.84 | 4.9 | 67.8 | 0.9 | 93.0 | -38 |
| Example 5 | TDMA/AA = 100/10 | D140N | 0.5 | 67 | 2.52 | 1.8 | 65 | 0.4 | 92.7 | -32 |
| Example 6 | ID/AA = 100/5 | TEDRAD-C | 0.3 | 66 | 2.35 | 3.5 | 88 | 0.1 | 92.6 | -40 |
| Comparative Example 1 | BA/HBA =100/3 | D110N | 0.5 | 86 | 5.30 | 3.4 | 87.9 | 0.2 | 93.6 | -54 |
| Comparative Example 2 | BA/LA/HBA = 60/40/1 | D110N | 0.5 | 85 | 3.95 | 1.1 | 85.6 | 0.6 | 93.1 | -37 |
| Comparative Example 3 | BA/STA/HBA = 60/40/1 | D110N | 0.5 | 76 | 4.01 | 1.2 | 80.9 | 0.8 | 93.2 | -28 |
| Comparative Example 4 | 2EHA/LA/HBA = 55/45/1 | D110N | 0.5 | 84 | 3.57 | 1.4 | 77.6 | 1.0 | 92.8 | -44 |

In Table 1,

TDMA represents tridecyl methacrylate (manufactured by Sartomer Co.; Tg of homopolymer therefrom: -40°C);
STMA, stearyl methacrylate (manufactured by Kyoeisha Chemical Co., Ltd.; Tg of homopolymer therefrom: 38°C);
ID, isodecyl methacrylate (manufactured by Kyoeisha Chemical Co., Ltd.; Tg of homopolymer therefrom: -41°C);
2EHA, 2-ethylhexyl acrylate (manufactured by Osaka Organic Chemical Industry Ltd.; Tg of homopolymer therefrom: -50°C);
LA, lauryl acrylate (manufactured by Kyoeisha Chemical Co., Ltd.; Tg of homopolymer therefrom: -3°C);
STA, stearyl acrylate (manufactured by Osaka Organic Chemical Industry Ltd.; Tg of homopolymer therefrom: 30°C);
AA, acrylic acid;
HBA, 4-hydroxybutyl acrylate; and
BA, butyl acrylate.

(Measurement of Tg of Each Homopolymer)

The Tg of each of the homopolymers was measured by thermogravimetry-differential thermal analysis (TG-DTA). About each of the monomers manufactured by Osaka Organic Chemical Industry Ltd., a homopolymer was produced therefrom by solution polymerization. The polymer was extracted, using a poor solvent, and the Tg thereof was measured by TG-DTA. About each of the monomers manufactured by Kyoeisha Chemical Co. , Ltd. , the monomer was polymerized into a homopolymer by UV polymerization (an unhardened fragment of the monomer was subjected to solution polymerization), and the Tg was measured by TG-DTA.

<Conditions>

Device: Q-2000, manufactured by TA Instruments
Average temperature-raising rate: 5°C/min
Atmosphere gas: nitrogen (50 mL/min)

The measurement was made, using about 2.5 mg of each of the homopolymers, and a middle temperature of temperatures over which an endothermic peak broadened was defined as the glass transition temperature.
D110N represents a trimethylolpropane adduct of xylylenediisocyanate (trade name: D110N, manufactured by Mitsui Chemicals, Inc.);
D140N, a trimethylolpropane adduct of hexamethylenediisocyanate (trade name: D140N, manufactured by Mitsui Chemicals, Inc.); and
TEDRAD-C,
1,3-bis(N,N-diglycidylaminomethyl)cyclohexane (trade name: TETRAD-C, manufactured by Mitsubishi Gas Chemical Co., Inc.).

DESCRIPTION OF REFERENCE SIGNS

1       Electrostatic-capacity-manner touch panel
11      Decorative panel
12      Adhesive layer or adhesive sheet
13      ITO film
14      Hard coat film

**Claims**

1. A pressure-sensitive adhesive composition, which contains a methacryl-based polymer obtained by polymerizing monomer components containing 40 to 99.5% by weight of an alkyl methacrylate having a C10-C18 alkyl group at its side chain, and having a glass transition temperature (Tg) of 0°C or lower.

2. The pressure-sensitive adhesive composition according to claim 1, wherein the methacryl-based polymer has a weight-average molecular weight of 400,000 to 2,500,000.

3. The pressure-sensitive adhesive composition according to claim 1 or 2, wherein the monomer components further contain 0.5% or more by weight of at least any one functional-group-containing monomer selected from carboxyl-group-containing monomers, hydroxyl-group-containing monomers, and cyclic-ether-group-containing monomers.

4. The pressure-sensitive adhesive composition according to any one of claims 1 to 3, wherein the monomer components further contain a (meth)acryl-based monomer having a C1-C10 alkyl group at its side chain.

5. The pressure-sensitive adhesive composition according to any one of claims 1 to 4, wherein the monomer components further contain a (meth)acryl-based monomer having a C3-C10 branched alkyl chain at its side chain.

6. A pressure-sensitive adhesive layer, which is obtained from the pressure-sensitive adhesive composition recited in any one of claims 1 to 5.

7. The pressure-sensitive adhesive layer according to claim 6, which has a dielectric constant of 3.5 or less at a frequency of 100 kHz.

8. The pressure-sensitive adhesive layer according to claim 6 or 7, which has a gel fraction of 20 to 98% by weight.

9. The pressure-sensitive adhesive layer according to any one of claims 6 to 8, which has a haze of 2% or less when the pressure-sensitive adhesive layer has a thickness of 25 $\mu$m.

10. A pressure-sensitive adhesive sheet, comprising a support, wherein the pressure-sensitive adhesive layer recited in any one of claims 6 to 9 that is formed over at least one side of the support.

11. The pressure-sensitive adhesive sheet according to claim 10, wherein the 90-degree peel adhesive strength (300 mm/min) of the pressure-sensitive adhesive layer to a non-alkali glass piece is 0.5 N/20-mm or more.

12. The pressure-sensitive adhesive sheet according to claim 10 or 11, which is used in an optical member.

FIG.1

| **INTERNATIONAL SEARCH REPORT** | International application No. |
|---|---|
| | PCT/JP2012/064691 |

**A. CLASSIFICATION OF SUBJECT MATTER**
*C09J133/10*(2006.01)i, *C09J7/00*(2006.01)i, *C09J7/02*(2006.01)i, *C09J133/14* (2006.01)i

According to International Patent Classification (IPC) or to both national classification and IPC

**B. FIELDS SEARCHED**

Minimum documentation searched (classification system followed by classification symbols)
C09J1/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 63-202682 A  (Nitto Denko Corp.),<br>22 August 1988 (22.08.1988),<br>claims; page 2, lower left column, lines 5 to 11; page 3, upper right column, lines 14 to 15; page 3, lower left column, lines 6 to 15; examples<br>(Family: none) | 1-11<br>12 |
| X<br>Y | JP 04-239575 A  (Nitto Denko Corp.),<br>27 August 1992 (27.08.1992),<br>claims; paragraphs [0009] to [0015]; examples<br>(Family: none) | 1-11<br>12 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 June, 2012 (21.06.12) | 04 September, 2012 (04.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/064691

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 04-031481 A (Soken Chemical & Engineering Co., Ltd.),<br>03 February 1992 (03.02.1992),<br>claims; page 2, upper right column, line 14 to lower left column, line 18; examples<br>(Family: none) | 1-11<br>12 |
| X<br>Y | JP 03-292379 A (Nitto Denko Corp.),<br>24 December 1991 (24.12.1991),<br>claims; page 2, lower left column, line 11 to lower right column, line 6; examples<br>(Family: none) | 1-11<br>12 |
| Y<br>A | JP 2011-017009 A (Nitto Denko Corp.),<br>27 January 2011 (27.01.2011),<br>claims<br>& JP 2006-48000 A      & WO 2006/003827 A1<br>& TW 261125 B      & KR 10-2006-0033713 A<br>& CN 1820217 A | 12<br>1-11 |
| A | WO 2010/147047 A1 (Nitto Denko Corp.),<br>23 December 2010 (23.12.2010),<br>claims<br>(Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003238915 A
- JP 2003342542 A
- JP 2004231723 A
- JP 2002363530 A